# FASCICULE DE BREVET EUROPEEN

(11) **EP 2 770 439 B1**
(45) Date de publication et mention de la délivrance du brevet: **14.08.2019**
(21) Numéro de dépôt: 14156054.0
(22) Date de dépôt: 20.02.2014
(51) Int. Cl.: G06F 11/34

(54) **Surveillance de mesure de performance d'une infrastructure informatique**
Überwachung der Leistungsmessung einer IT-Infrastruktur
Monitoring for measuring the performance of a computer infrastructure

(30) Priorité: 22.02.2013 FR 1351560
(43) Date de publication de la demande: 27.08.2014
(73) Titulaire: BULL SAS, 78340 Les Clayes sous Bois (FR)
(72) Inventeur: Aiello, Damien, 38500 La Buisse (FR); Demeilliez, Bruno, 38410 Saint-Martin D'Uriage (FR); Keribin, Valérie, 38100 Grenoble (FR)
(74) Mandataire: A.P.I. Conseil

(56) Documents cités:
- WO-A2-03/014878
- US-A1- 2002 198 984
- US-B1- 6 249 886

## Description

La présente invention concerne le domaine des tests de performance d'infrastructures informatiques.

De telles infrastructures informatiques sont par exemple des applications « n-tiers » avec un serveur de présentation, un serveur métier et un serveur de persistance, ou encore des calculateurs hautes performances, généralement désignés sous leur appellation anglo-saxonne « *clusters* » HPC (HPC étant le sigle de « *High Performance Computing* »). Les infrastructures peuvent comporter un ensemble de serveurs (par exemple Web).

Les tests (ou mesures) de performance (« Benchmark » en terminologie anglo-saxonne) peuvent avoir pour objectif de résoudre des problèmes de performance se produisant uniquement en charge (c'est-à-dire en fonctionnement avec un grands nombre d'utilisateurs), de dimensionner une infrastructure nécessaire pour une application en fonction d'une utilisation donnée, de valider les performances, l'endurance, la robustesse d'une application, de comparer des évolutions (briques logicielles, version d'application, optimisations, etc.), ou autre.

Les applications (ou logiciels) de test de performance permettent de simuler plusieurs utilisateurs simultanément. Par exemple, pour une infrastructure informatique d'application Web (un réseau de serveurs Web), l'application de test est capable d'envoyer vers l'infrastructure un très grand nombre de requêtes (par exemple au format HTML), comme si elles provenaient d'utilisateurs simultanés différents.

Ces applications permettent de créer un ou plusieurs scénarios de test en choisissant une ou plusieurs requêtes à faire exécuter par l'architecture testée et en choisissant un débit de requêtes pour chaque scénario.

Les applications de test effectuent un certain nombre de mesures (temps de réponse de l'infrastructure, taux d'erreurs, ou autre) et génèrent un rapport de test.

Une application de test connue, développée par *Apache Software Foundation,* est *JMeter.* Il s'agit d'un outil de test de charge en langage JAVA.

De manière générale, un test de performance d'infrastructure informatique, peut se dérouler en plusieurs étapes.

Dans une première étape, la stratégie de test est définie, avec notamment :
- la définition du contexte technique de l'architecture testée,
- le choix d'un ou plusieurs scénarios et la pondération de ces scénarios (c'est-à-dire la définition de l'importance relative des uns par rapport aux autres),
- la détermination de la volumétrie cible (c'est-à-dire le débit de requêtes souhaité pour le test),
- la définition de l'architecture testée,
- la définition des prérequis.

Ensuite, l'environnement du test est mis en place. Il s'agit par exemple d'appliquer une certaine configuration à l'architecture informatique testée pour pouvoir tester cette configuration en particulier.

Les scénarios de test sont ensuite capturés au moyen d'applications de test (par exemple JMeter) puis modifiés pour être paramétrables. Ensuite, à partir de ces définitions, les jeux d'instructions d'injection sont construits. Il s'agit de définir les paramètres des requêtes à envoyer vers l'infrastructure testée pour mettre en oeuvre les scénarios (par exemple sous forme de fichier CSV, sigle de « *Comma-separated values* », ou d'un export d'une base de données).

Pour effectuer les mesures de performance, il peut être nécessaire de développer des sondes de mesure spécifiques à une grandeur particulière.

Des scripts d'ordonnancement préexistants sont ensuite adaptés ou complétés pour exécuter de façon chronologique les tâches nécessaires à la mise en oeuvre des scénarios selon les jeux d'injection.

Enfin, des tirs sont exécutés lors d'une « *campagne de test* » et les résultats sont mesurés et analysés pour générer un rapport.

Une campagne de test comporte un ensemble de tirs qui sont effectués dans une période de temps définie. Les tirs sont lancés par un ordonnanceur. Un tir peut se caractériser par un niveau d'injection et une durée ainsi qu'un ensemble d'opérations qui sont effectués durant l'injection.

Une analyse synthétique est effectuée en fin de de tir à partir de laquelle sont constatés les résultats de la mesure de performance et déterminées les caractéristiques des tirs suivants.

Or, ces résultats ne peuvent être significatifs qu'à condition que les tirs se soient déroulés comme prévu.

En effet, des dérives peuvent apparaître au cours d'un tir. Ces dérives peuvent êtres dues à une charge d'injection trop importante, à un problème applicatif (mauvaise gestion des accès concurrent par exemple) ou à une saturation des ressources d'un ou plusieurs serveurs.

Pour s'assurer du bon déroulement d'un tir, des solutions graphiques existent. Elles consistent à afficher à un utilisateur des courbes et des graphiques représentant l'évolution du test.

Cependant, cette solution graphique nécessite une attention de tous les instants de la part de l'utilisateur ainsi qu'une grande expertise pour interpréter en temps réel les résultats.

En outre, cette solution nécessite d'allouer des ressources graphiques spécifiques qui ne sont pas toujours disponibles dans l'architecture testée et qui peuvent avoir des impacts sur les performances de l'infrastructure testée en utilisant des ressources pour visualiser ses performances. Il existe donc un besoin pour améliorer la surveillance des tests d'infrastructures.

Le document US6249886 décrit un procédé de test de performance d'un système informatique dans lequel des résultats de mesure sont mis à jour périodiquement, à partir desquels une performance moyenne et un éventuel dépassement de seuil sont calculés.

La présente invention s'inscrit dans ce cadre.

Un **premier aspect** de l'invention concerne un procédé de test de performance d'infrastructures informatiques selon la revendication 1.

Un procédé selon le premier aspect permet de suivre l'évolution d'un tir en temps réel et éventuellement d'y mettre fin en cas de détection d'une anomalie. Le suivi de cette évolution est automatique et permet de s'affranchir d'un suivi par un utilisateur de l'évolution de courbes dans des graphiques.

Un tir peut ainsi être surveillé, même si il s'étale sur plusieurs jours, voire plusieurs semaines, sans nécessiter de prévoir une équipe de surveillance nombreuse.

Un procédé selon le premier aspect ne nécessite pas de ressources trop importantes qui ne seraient pas déjà disponibles dans les types de mise en oeuvre de mesures de performances déjà existants et qui viendraient perturber le système testé par des calculs et de flux de données nécessaire à la surveillance.

Par exemple, le message d'alerte comporte un rapport synthétique sur le déroulement du test. Ce rapport peut par exemple préconiser l'arrêt du test en cours en fonction de critères définis (par exemple par un utilisateur). Le message peut être transmis par courriel. Il peut cependant s'agir de tout autre type de message, par exemple une alerte sur un écran, une alerte sonore ou autre.

Le procédé peut en outre comporter une étape d'accès à un fichier de configuration stockant au moins l'un :
d'un premier paramètre relatif à ladite condition de calcul,
d'un deuxième paramètre relatif à l'étape de génération, et
d'un troisième paramètre relatif à l'étape de calcul de tendance.

Au moins l'une des étapes de vérification, de calcul et de génération peut alors être mise en oeuvre en fonction dudit premier, deuxième et troisième paramètre respectivement.

Ainsi, la surveillance peut être paramétrée à la demande en fonction de chaque tir surveillé.

La condition de lancement du calcul peut être relative à une fréquence de lancement de ladite étape de calcul.

Ainsi, le comportement de l'infrastructure est vérifié de manière régulière.

La condition de lancement de calcul peut aussi être relative à un nombre de résultats de mesure lus et stockés.

Ainsi, le comportement de l'infrastructure est vérifié en fonction de l'activité de celle-ci. Il est possible de tenir compte du temps de réponse de l'infrastructure

Les résultats de mesure peuvent être des messages d'erreurs. Ainsi, il est possible de vérifier le comportement de l'infrastructure en fonction d'un nombre d'erreurs constatées.

Le calcul de tendance peut comporter la comparaison dudit au moins un résultat de mesure à un seuil de détermination de tendance.

Ainsi, il est possible de définir un comportement cible à partir de valeurs de résultats de mesure à ne pas dépasser. Il s'agit par exemple de temps de réponse ou autre.

Par exemple, le seuil de détermination de tendance est relatif à un nombre de messages d'erreur contenus dans au moins un résultat de mesure issu desdites itérations.

Le procédé peut en outre comporter une étape d'arrêt de ladite mesure en cours à destination d'un module d'exécution de ladite mesure en cours.

Ainsi, il est possible de ne pas poursuivre inutilement un tir lorsque les résultats dévient de manière trop importante de ce qui est attendu par rapport au scénario de test défini.

Le procédé peut en outre comporter une étape d'arrêt de l'injection en cours.

Le procédé peut en outre comporter une étape de reprise desdites étapes de mesure et de stockage itératifs, suite à ladite étape de génération.

Ainsi, le tir peut ne pas être automatiquement arrêté. Il est ainsi possible de réagir au résultat du calcul de tendance de comportement de manière flexible et de laisser le tir se dérouler lorsque la déviance par rapport au comportement attendu n'est pas trop importante.

Par exemple, l'étape de reprise est mise en oeuvre suite à la réception d'un message d'autorisation de reprise.

L'autorisation de reprise peut être donnée par un utilisateur, via une interface. Elle peut aussi être donnée par un module prévu à cet effet. Par exemple, ce module stocke un historique des alertes émises lors de campagnes de test et les actions qui ont été prises en réponse. Le module ainsi dédié peut réaliser une analyse automatique de la déviance constatée et réagir automatiquement.

Un **deuxième aspect** de l'invention concerne un programme d'ordinateur ainsi qu'un produit programme d'ordinateur et un support de stockage pour de tels programme et produit, permettant la mise en oeuvre d'un procédé selon le premier aspect de l'invention, lorsque le programme est stocké dans une mémoire d'un dispositif de surveillance de mesure de test de performance et exécuté par un processeur d'un tel dispositif.

Un **troisième aspect** de l'invention concerne un dispositif de test de performance d'infrastructures informatiques selon la revendication 9, configuré pour la mise en oeuvre d'un procédé selon le premier aspect.

D'autres caractéristiques et avantages de l'invention apparaîtront à la lecture de la présente description détaillée qui suit, à titre d'exemple non limitatif, et des figures annexées parmi lesquelles :
- la **figure 1** illustre un contexte général de mise en oeuvre de modes de réalisation ;
- la **figure 2** est un organigramme d'étapes mises en oeuvre selon des modes de réalisation ; et
- la **figure 3** illustre schématiquement un dispositif selon des modes de réalisation.

Dans la description qui suit, il est présenté un outil pour surveiller le déroulement d'un « tir » d'une application de test d'infrastructure informatique.

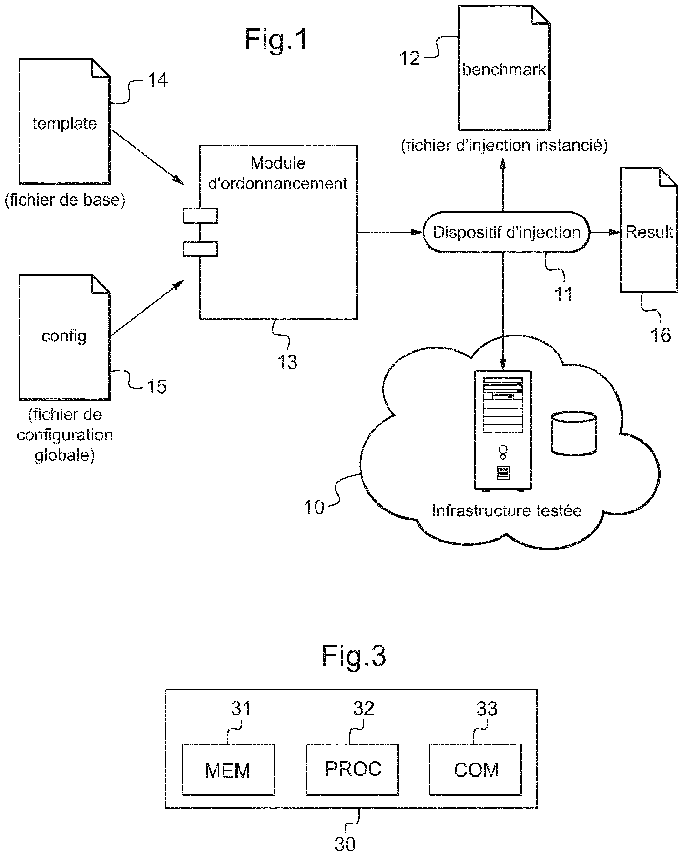

La **figure 1** illustre un contexte général de mise en oeuvre de modes de réalisation d'une surveillance de mesure de performance.

Une infrastructure informatique 10, qui met en oeuvre une ou plusieurs applications logicielles est testée. Cette infrastructure est par exemple une application n-tiers. Il est possible d'envisager d'autres infrastructures informatiques.

A cet effet, un dispositif d'injection 11, mettant en oeuvre une application de test, envoie vers l'infrastructure 10 un ensemble de requêtes (« tir ») que l'infrastructure exécute. Le dispositif reçoit par ailleurs de l'infrastructure des résultats d'exécution de ces requêtes et des données de mesure de performance.

Pour exécuter le tir, le dispositif d'injection reçoit ou lit un fichier d'injection instancié 12 « *benchmark* ». Ce fichier d'injection est généré par un module d'ordonnancement 13. Ce module d'ordonnancement peut faire partie du dispositif d'injection ou faire partie d'un autre dispositif spécifiquement dédié à la génération du fichier d'injection 12.

Pour générer le fichier d'injection 12, le module d'ordonnancement utilise un fichier de base 14 « *template »* et un fichier de configuration 15 « *config* ».

Le module d'ordonnancement exécute un script d'ordonnancement, par exemple écrit en langage Bash, qui automatise les tâches liées à la mesure de performance (Benchmark) d'une application informatique. Ce script peut comporter une ou plusieurs des étapes suivantes, implémentées sous forme de fonctions, notamment :
- configurer le module d'injection pour exécuter le tir,
- rediriger les requêtes vers les éléments (matériels ou logiciels) de l'infrastructure),
- copier, ou calculer, les paramètres d'injection dans le fichier d'injection,
- arrêter les sondes de mesure,
- arrêter les services de l'infrastructure informatique,
- démarrer les services de l'infrastructure informatique,
- démarrer les sondes de mesure,
- injecter les requêtes vers l'infrastructure informatique,
- arrêter les services,
- arrêter les sondes,
- collecter les données de mesure,
- démarrer les services,
- analyser les données de mesure,
- archiver les données de mesure.

L'étape « injecter » appelle l'exécution du fichier d'injection par le dispositif d'injection.

L'étape « copier » consiste à calculer les paramètres nécessaires à la génération du fichier d'injection.

Lors de cette étape, le module d'ordonnancement lit le fichier de configuration 15 et prépare le fichier d'injection 12 à destination du dispositif d'injection. Pour chaque scénario dans le fichier de configuration, des variables d'injection sont calculées afin de les intégrer au fichier d'injection et permettre au dispositif d'injection de cadencer les instructions envoyées vers l'infrastructure informatique testée.

Lors de la compagne de tir, le dispositif d'injection génère des résultats de mesure. Il s'agit par exemple du temps de réponse moyen de l'infrastructure testée en fonction de chaque type de requête envoyée, l'écart-type des temps de réponse, le temps maximum, le temps minimum, les déciles, le nombre de requêtes traitées, le nombre de requêtes en échec et/ou en succès, des messages d'erreur ou autre.

Ces résultats sont stockés au fur et à mesure dans un fichier de résultat de mesure 16.

Afin de surveiller le déroulement du tir, le dispositif d'injection accède régulièrement au fichier de résultat de mesure. Le dispositif d'injection lit et stocke les résultats de manière régulière les résultats de mesure dans le fichier 16.

Lorsqu'une condition de calcul de tendance de comportement est remplie. une analyse des résultats obtenus peut être lancée. Cette condition de calcul de tendance de comportement permet de lancer régulièrement des analyses partielles des résultats obtenus afin de déterminer si la mesure de performance suit la tendance voulue. En d'autres termes, il s'agit de déterminer si la mesure de performance suit le scénario de test défini et si l'infrastructure informatique testée réagit conformément à un comportent attendu.

L'analyse synthétique partielle des résultats obtenus permet de déterminer la tendance de comportement prise par l'infrastructure informatique durant le test et de prendre une décision quant à la suite à donner au test.

En fonction du résultat de calcul de tendance de comportement, diverses actions peuvent être prises comme par exemple l'arrêt du tir, l'émission d'un message d'alerte ou autre.

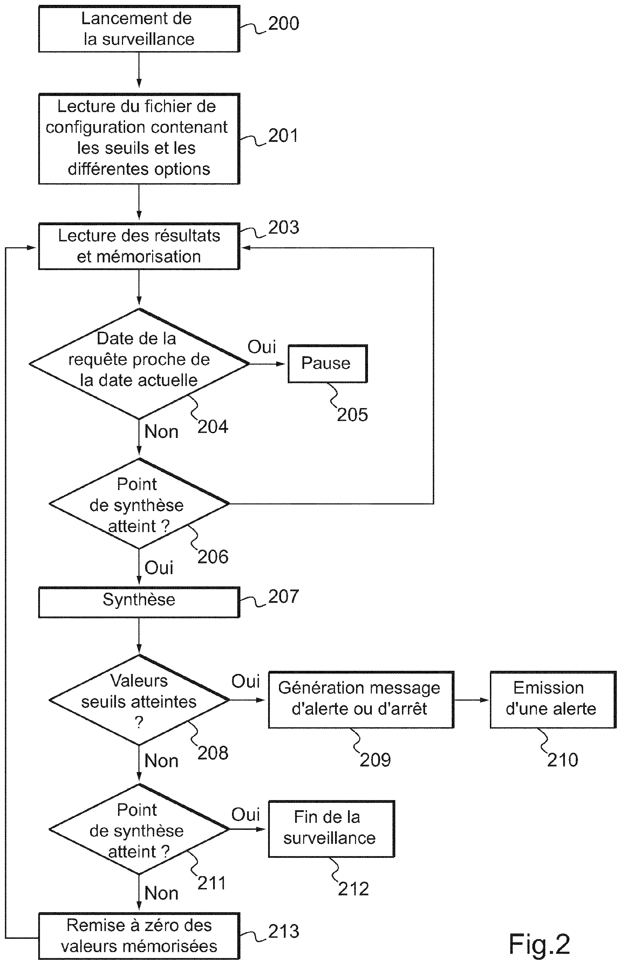

Des étapes d'un procédé de surveillance selon des modes de réalisation sont présentées en référence à l'organigramme de la **Figure 2****.** Ces étapes sont par exemple mises en oeuvre par un dispositif d'injection.

Lors d'une première étape 200, il est procédé au lancement de la surveillance d'une campagne de tir menée pour tester une infrastructure informatique. La surveillance peut être lancée consécutivement au lancement du tir. La surveillance peut également être lancée antérieurement au lancement du tir. La surveillance ne débute toutefois que lorsque que le tir est en cours.

Ensuite, lors d'une étape 201, différents paramètres de mise en oeuvre de la surveillance sont obtenus. Par exemple, il est accédé à un fichier de configuration de surveillance de campagne de tir (non représenté). Ces paramètres peuvent notamment concerner une condition de lancement de calcul de tendance de comportement (par exemple une fréquence de lancement de calcul), une indication concernant une action à entreprendre suite au calcul de la tendance de comportement (par exemple l'émission d'une alerte) ou un paramètre relatif à ce calcul (par exemple des seuils de dépassement d'un comportement acceptable). D'autres indications ou paramètres peuvent être obtenus, par exemple dans le fichier de configuration de surveillance.

Une fois la surveillance du tir lancée et configurée, l'accès au fichier de résultat de mesure est lancé à fin de lire et de stocker de manière itérative lors de l'étape 203 les résultats de mesure qui y sont régulièrement ajoutées par le dispositif d'injection.

Les requêtes exécutées lors du tir peuvent ne pas fournir l'ensemble de leurs résultats de manière immédiate. Ainsi, lorsqu'il est détecté un nouveau résultat de mesure relatif à une requête dans le fichier de mesure, il est déterminé lors d'une étape 204 si la date d'exécution de la requête se rapproche ou non de la date de lecture de résultat. Par exemple, il est déterminé si un temps caractéristique de la réponse des requêtes utilisées dans le tir s'est écoulé depuis l'exécution de la dernière requête. Ainsi, dans le cas où les dates sont rapprochées (OUI), une étape de temporisation 205 et mise en oeuvre. Cette temporisation peut avoir la durée du temps nominal d'exécution de la requête.

Par contre, si la date d'exécution de la dernière requête ne se rapproche pas de la date actuelle (NON), il est testé lors de l'étape 206 si une condition de lancement de calcul de tendance de comportement est remplie.

Par exemple, ce calcul peut être lancé à intervalles réguliers durant le tir. Ainsi, la condition à tester peut résider dans la vérification que le temps écoulé depuis le dernier calcul correspond à la fréquence de lancement. D'autres conditions de lancement de calcul peuvent être envisagées. Par exemple, il peut s'agir de compter le nombre de résultats de mesure lus dans le fichier de résultat de mesure. Ainsi, dans ce cas, la condition à vérifier peut résider dans la vérification du nombre de résultats de mesures lus depuis le lancement du dernier calcul.

Si la condition de lancement de calcul n'est pas satisfaite, c'est-à-dire que le point de synthèse n'est pas atteint (NON), le processus retourne à l'étape 203 pour la lecture et le stockage d'autres résultats de mesure.

Si au contraire la condition de lancement de calcul est satisfaite (OUI), il est procédé, lors d'une étape de synthèse 207, à une mise en forme des derniers résultats lus et stockés en vue de les préparer pour le calcul de tendance de comportement. L'étape 207 peut être accompagnée d'un affichage de graphiques pour l'utilisateur.

Lorsque les résultats de mesure sont traités, le calcul de tendance de comportement est lancé. Par exemple, il s'agit de déterminer lors d'une étape 208, si des valeurs de seuil (par exemple issues du fichier de configuration de surveillance) sont dépassées par les mesures obtenues du fichier de résultat de mesure. Il peut par exemple s'agir de déterminer si le temps de réponse moyen de l'infrastructure informatique testée est supérieur à un temps de réponse nominal.

Si les valeurs de seuil sont dépassées, il en est déduit que l'infrastructure informatique à tendance à s'écarter du comportement attendu lors du tir. Ainsi, il est généré lors d'une étape 209 un message d'alerte pour informer l'utilisateur de cet écart. Par exemple, un message est affiché dans une interface graphique lors d'une étape 210. Alternativement, le message généré peut viser à stopper le tir.

Si au contraire lors de l'étape 208, les valeurs de seuil ne sont pas dépassées, il est testé lors de l'étape 211 si la fin du fichier de résultat de mesure est atteinte. Si c'est le cas (OUI), la surveillance est terminée lors de l'étape 212. Si au contraire, la fin du fichier n'est pas atteinte (NON), le processus retourne à l'étape 203 pour la lecture et la mémorisation de nouveaux résultats de mesure. Le retour à l'étape 203 peut être précédé d'une étape 213 de remise à zéro des valeurs précédemment mémorisées pour le dernier calcul de tendance de comportement.

Une fois les étapes 209 et 210 exécutées, le processus de lecture et de stockage itératif des résultats de mesure peut se poursuivre automatiquement. L'étape 203 est donc reprise sans condition. Toutefois, il est possible de conditionner cette reprise à un critère de reprise. Par exemple, il s'agit de se mettre en attente de la réception d'un message d'autorisation de reprise. Ce message d'autorisation de reprise peut par exemple provenir d'un utilisateur. Ce message peut aussi provenir d'un module d'autorisation chargé d'analyser la ou les causes qui ont conduit au message d'alerte ou à l'arrêt du tir. Par exemple, ce module opère une analyse d'alertes précédentes et des actions qui ont été entreprises par la suite. Une série d'autorisations peut également être prévue en cas d'alertes prévisibles. Cette série d'autorisation peut être stockée auprès de ce module d'autorisation. Par exemple, le module d'autorisation intervient dans un premier temps et l'utilisateur est sollicité en dernier recours pour décider de reprendre ou non le processus de surveillance. Des autorisations de reprise peuvent aussi être mentionnées dans le fichier de configuration.

Un dispositif de surveillance de performance d'architecture informatique selon des modes de réalisation est décrit en référence à la **figure 3****.**

Le dispositif 30 de la figure 3 comporte une unité de mémoire 31 (MEM). Cette unité de mémoire comporte une mémoire vive pour stocker de manière non durable des données de calcul utilisées lors de la mise en oeuvre d'un procédé conforme à l'invention, selon divers modes de réalisation. Par exemple, cette mémoire permet de stocker les résultats de mesure lus de manière itérative, en attendant la satisfaction de la condition de lancement de calcul. L'unité de mémoire comporte par ailleurs une mémoire non volatile (par exemple du type EEPROM) pour stocker par exemple un programme d'ordinateur, selon un mode de réalisation, pour son exécution par un processeur (non représenté) d'une unité de traitement 32 (PROC) du dispositif. Par exemple, l'unité de mémoire peut stocker un fichier de base « *template* », un fichier d'injection, ou un fichier de configuration de surveillance de campagne de tir comme décrit précédemment.

Le dispositif comporte par ailleurs une unité de communication 33 (COM), par exemple pour recevoir des fichiers d'injection et/ou des résultats de mesure de performance, et/ou pour envoyer des requêtes vers une infrastructure informatique à tester et/ou pour émettre des alertes.

La présente invention a été décrite et illustrée dans la présente description détaillée en référence aux figures jointes. Toutefois la présente invention ne se limite pas aux formes de réalisation présentées. D'autres variantes et modes de réalisation peuvent être déduits et mis en oeuvre par la personne du métier à la lecture de la présente description et des figures annexées.

Dans les revendications, le terme "comporter" n'exclut pas d'autres éléments ou d'autres étapes. L'article indéfini « un » n'exclut pas le pluriel. Un seul processeur ou plusieurs autres unités peuvent être utilisées pour mettre en oeuvre l'invention. Les différentes caractéristiques présentées et/ou revendiquées peuvent être avantageusement combinées. Leur présence dans la description ou dans des revendications dépendantes différentes, n'exclut pas en effet la possibilité de les combiner. Les signes de référence ne sauraient être compris comme limitant la portée de l'invention.

## Revendications

1. Procédé de test de performance d'infrastructures informatiques par surveillance de mesure de performance d'infrastructure informatique (10), ladite mesure étant en cours de réalisation, le procédé comportant les étapes suivantes:
- de lecture et de stockage itératifs (203) d'un nombre de résultats de mesure relatif à au moins une requête exécutée par ladite infrastructure informatique au cours de ladite mesure en cours de réalisation à partir d'un fichier de résultat de mesure (16),
- de détermination (204) si un temps caractéristique de la réponse des requêtes utilisées dans le tir s'est écoulé depuis l'éxecution de la dernière requête et, lorsque cette condition est remplie:
- de vérification (206) d'une condition de calcul de tendance de comportement de ladite structure informatique ladite condition étant relative au nombre de résultats de mesure lus et stockés,
- de calcul (208) d'une tendance de comportement dudit système informatique, en fonction d'au moins un résultat de mesure issu d'itérations précédant la réalisation de ladite condition, desdites étapes de lecture et de stockage, et
- de génération (209) d'un message d'alerte en fonction de ladite tendance déterminée.

2. Procédé selon la revendication 1, comportant une étape d'accès à un fichier de configuration stockant au moins l'un :
d'un premier paramètre relatif à ladite condition de calcul,
d'un deuxième paramètre relatif à l'étape de génération, et
d'un troisième paramètre relatif à l'étape de calcul de tendance, et dans lequel au moins l'une des étapes de vérification, de calcul et de génération est mise en oeuvre en fonction dudit premier, deuxième et troisième paramètre respectivement.

3. Procédé selon l'une des revendications précédentes, dans lequel ladite condition est relative à une fréquence de lancement de ladite étape de calcul.

4. Procédé selon l'une des revendications précédentes, dans lequel ledit calcul de tendance comporte la comparaison dudit au moins un résultat de mesure à un seuil de détermination de tendance.

5. Procédé selon la revendication 4, dans lequel ledit seuil de détermination de tendance est relatif à un nombre de messages d'erreur contenus dans au moins un résultat de mesure issu desdites itérations.

6. Procédé selon l'une des revendications précédentes, comportant en outre une étape d'arrêt de ladite mesure en cours à destination d'un module d'exécution de ladite mesure en cours.

7. Procédé selon l'une des revendications précédentes, comportant en outre une étape de reprise desdites étapes de mesure et de stockage itératifs, suite à ladite étape de génération.

8. Procédé selon la revendication 7, dans lequel ladite étape de reprise est mise en oeuvre suite à la réception d'un message d'autorisation de reprise.

9. Dispositif de test de performance d'infrastructures informatiques par surveillance de mesure de performance d'infrastructure informatique en cours de réalisation (30), comportant une unité de traitement (32) configurée pour lire et stocker de manière itérative d'un nombre de résultats de mesure relatif à au moins une requête exécutée par ladite infrastructure informatique au cours de ladite mesure en cours de réalisation à partir d'un fichier de résultat de mesure, déterminer (204) si un temps caractéristique de la réponse des requêtes utilisées dans le tir s'est écoulé depuis l'éxecution de la dernière requête et, lorsque cette condition est remplie, vérifier (206) une condition de calcul de tendance de comportement de ladite structure informatique, ladite condition étant relative au nombre de résultats de mesure lus et stockés, calculer (208) une tendance de comportement dudit système informatique, en fonction d'au moins un résultat de mesure issu d'itérations, précédant la réalisation de ladite condition, desdites étapes de lecture et de stockage, et générer (209) un message d'alerte en fonction de ladite tendance déterminée.

## Patentansprüche

1. Verfahren zum Leistungstest von IT-Infrastrukturen durch Überwachen der Leistungsmessung der IT-Infrastruktur (10), wobei die Messung läuft und das Verfahren die folgenden Schritte umfasst:
- Iteratives Lesen und Speichern (203) einer Anzahl von Messergebnissen bezüglich zumindest einer Anforderung, die von der IT-Infrastruktur während der laufenden Messung ausgehend von einer Messergebnisdatei (16) ausgeführt wird,
- Bestimmen (204), ob seit der Ausführung der letzten Anforderungen eine charakteristische Antwortzeit auf die Anforderungen abgelaufen ist, die im Messausschlag verwendet werden, und wenn diese Bedingung erfüllt ist:
- Verifizieren (206) einer Bedingung zum Berechnen des Verhaltenstrends der IT-Struktur, wobei die Bedingung zur Anzahl der gelesenen und gespeicherten Messergebnisse relativ ist,
- Berechnen (208) eines Verhaltenstrends des IT-Systems in Abhängigkeit von zumindest einem Messergebnis, das sich aus Iterationen ergibt, die der Erfüllung der Bedingung und der Lese- und Speicherschritte vorausgehen, und
- Erzeugen (209) einer Warnmeldung gemäß bestimmtem Trend.

2. Verfahren nach Anspruch 1, umfassend einen Schritt des Zugriffs auf eine Konfigurationsdatei, in der zumindest einer
eines ersten Parameters relativ zur Berechnungsbedingung,
eines zweiten Parameters relativ zum Erzeugungsschritt und
eines dritten Parameters relativ zum Trendberechnungsschritt gespeichert ist, und in der zumindest einer der Verifikations-, Berechnungs- und Erzeugungsschritte in Abhängigkeit vom ersten, beziehungsweise zweiten und dritten Parameter eingesetzt wird.

3. Verfahren nach einem beliebigen der vorstehenden Ansprüche, wobei sich die Bedingung auf eine Startfrequenz des Berechnungsschritts bezieht.

4. Verfahren nach einem beliebigen der vorstehenden Ansprüche, wobei die Trendberechnung das Vergleichen des zumindest einen Messergebnisses mit einem Trendbestimmungsschwellenwert umfasst.

5. Verfahren nach Anspruch 4, wobei sich der Trendbestimmungsschwellenwert auf eine Anzahl von Fehlermeldungen bezieht, die in zumindest einem Messergebnis aus den Iterationen enthalten sind.

6. Verfahren nach einem beliebigen der vorstehenden Ansprüche, ferner umfassend einen Schritt mit Stoppen der laufenden Messung zu einem Ausführungsmodul der laufenden Messung.

7. Verfahren nach einem beliebigen der vorstehenden Ansprüche, ferner umfassend einen Schritt mit Wiederaufnahme der iterativen Mess- und Speicherschritte nach dem Erzeugungsschritt.

8. Verfahren nach Anspruch 7, wobei der Wiederaufnahmeschritt nach Erhalt einer Wiederaufnahme-Genehmigungsnachricht durchgeführt wird.

9. Vorrichtung zum Leistungstest von IT-Infrastrukturen durch Überwachen der gerade laufenden (30) Leistungsmessung der IT-Infrastruktur, umfassend eine Verarbeitungseinheit (32), die so konfiguriert ist, dass sie aus einer Messergebnisdatei iterativ eine Anzahl von Messergebnissen liest und speichert, die sich auf zumindest eine Anforderung beziehen, die von der IT-Infrastruktur während der laufenden Messung ausgeführt wird, Bestimmen (204), ob seit der Ausführung der letzten Anforderungen eine charakteristische Antwortzeit auf die Anforderungen abgelaufen ist, die im Messausschlag verwendet werden, und wenn diese Bedingung erfüllt ist,
Verifizieren (206) einer Bedingung zum Berechnen des Verhaltenstrends der IT-Struktur, wobei die Bedingung zur Anzahl der gelesenen und gespeicherten Messergebnisse relativ ist, Berechnen (208)
eines Verhaltenstrends des IT-Systems in Abhängigkeit von zumindest einem Messergebnis, das sich aus Iterationen ergibt, die der Erfüllung der Bedingung und der Lese- und Speicherschritte vorausgehen, und
eine Warnmeldung gemäß bestimmtem Trend erzeugen (209).

## Claims

1. A method for testing a performance of IT infrastructures by monitoring a measurement of the performance of IT infrastructures (10), said measurement being carried out, the method including the following steps:
- iteratively reading and storing (203) a number of measurement results relating to at least one request executed by said IT infrastructure during said measurement being carried out from a measurement result file (16),
- determining (204) whether a time characteristic of the response of the requests used in the load test have elapsed since the execution of the last request and, when this condition is fulfilled:
- monitoring (206) a condition of the calculation of a behavior tendency of said IT structure, said condition relating to the number of read and stored measurement results,
- calculating (208) a behavior tendency of said computer system, based on at least one measurement result from iterations preceding the fulfillment of said condition and on said reading and storage steps, and
- generating (209) an alert message according to said determined tendency.

2. The method according to claim 1, including a step of accessing a configuration file storing at least one:
of a first parameter relating to said calculation condition,
of a second parameter relating to the generation step, and
of a third parameter relating to the tendency calculation step, and
wherein at least one of the monitoring, calculation and generation steps is implemented according to said first, second and third parameters respectively.

3. The method according to any of the preceding claims, wherein said condition relates to a frequency of starting of said calculation step.

4. The method according to any of the preceding claims, wherein said tendency calculation includes the comparison of said at least one measurement result with a tendency determination threshold.

5. The method according to claim 4, wherein said tendency determination threshold relates to a number of error messages contained in at least one measurement result from said iterations.

6. The method according to any of the preceding claims, further including a step of stopping said current measurement for a module of executing said current measurement.

7. The method according to any of the preceding claims, further including a step of resuming said iterative measurement and storage steps, following said generation step.

8. The method according to claim 7, wherein said resumption step is implemented following the receipt of a resumption authorization message.

9. A device for testing a performance of IT infrastructures by monitoring a measurement of the performance of IT infrastructures (30) being carried out, including a processing unit (32) configured to iteratively read and store a number of measurement results relating to at least one request executed by said IT infrastructure during said measurement being carried out from a measurement result file, to determine (204) whether a time characteristic to the response of the requests used in the load test has elapsed since the execution of the last request and, when this condition is fulfilled,
- monitoring (206) a condition of calculation of the behavior tendency of said IT structure, said condition relating to the number of read and stored measurement results,
- calculating (208) a behavior tendency of said computer system, based on at least one measurement result from iterations, preceding the fulfillment of said condition and on said reading and storage steps, and
- generating (209) an alert message according to said determined tendency.
